(19) Europäisches Patentamt
European Patent Office
Office européen des brevets

(11) EP 1 018 299 B1

(12) EUROPÄISCHE PATENTSCHRIFT

(45) Veröffentlichungstag und Bekanntmachung des Hinweises auf die Patenterteilung:
**16.03.2005 Patentblatt 2005/11**

(51) Int Cl.$^7$: **A01N 25/02**, A01N 25/30

(21) Anmeldenummer: **00106007.8**

(22) Anmeldetag: **01.07.1993**

(54) **Pflanzenbehandlungsmittel**

Plant treatment agents

Agents pour le traitement de plantes

(84) Benannte Vertragsstaaten:
**AT BE CH DE DK ES FR GB GR IE IT LI LU MC NL PT SE**

(30) Priorität: **03.07.1992 DE 42218773 F**
**09.06.1993 DE 4319263**

(43) Veröffentlichungstag der Anmeldung:
**12.07.2000 Patentblatt 2000/28**

(62) Dokumentnummer(n) der früheren Anmeldung(en) nach Art. 76 EPÜ:
**93110538.1 / 0 579 052**

(73) Patentinhaber: **Bayer CropScience AG**
**40789 Monheim (DE)**

(72) Erfinder: **Schönherr, Jörg, Prof. Dr.**
**29308 Winsen-Bannetze (DE)**

(56) Entgegenhaltungen:
**EP-A- 0 116 229** **DE-A- 1 904 072**
**GB-A- 2 157 952** **US-A- 3 188 194**

- **D.J.TURNER: "The Influence of Additives on the Penetration of Foliar Applied Growth Regulator Herbicides" PESTICIDE SCIENCE, Bd. 3, Nr. 3, 1972, Seiten 323-331, XP002136174 BARKING, GB;**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 018 299 B1

Printed by Jouve, 75001 PARIS (FR)

## Beschreibung

Die Erfindung betrifft ein Pflanzenbehandlungsmittel in wässriger Form bzw. als Suspension/Emulsion für die oberirdische Ausbringung, enthaltend mindestens einen fungiziden Wirkstoff sowie an sich bekannte zusätzliche Hilfsstoffe und einen Akzelerator; ein Verfahren zur Verbesserung des Eindringvermögens und die Verwendung von Akzeleratoren in Pflanzenbehandlungsmitteln.

Pflanzenbehandlungsmittel in Form von Formulierungen, die einen oder mehrere Wirkstoffe enthalten, und Hilfsstoffe oder Adjuvantien sind bekannt. So werden in Bioziden meist Tenside zugesetzt, um die Benetzungsfähigkeit der Blätter zu verbessern. Emulgatoren und Lösungsmittel werden verwendet, um Wirkstoffe mit geringer Wasserlöslichkeit entweder als Emulsion oder als Suspension unter Verwendung von Wasser als Träger ausbringen zu können.

Turner (D.J.TURNER: The Influence of Additives on the Penetration of Foliar Applied Growth Regulator Herbicides' PESTICIDE SCIENCE, Bd. 3, Nr. 3, 1972, Seiten 323-331, BARKING, GB) beschreibt wässrigen Herbizidlösungen bzw. Emulsionen/Supensionen die Organophosphate als Synergisten enthalten.

In US-A-3 188 194 sind wäßrige Herbizidlösungen bzw. Emulsionen/Supensionen enthaltend Organophosphate beschrieben.

So beschreibt die DE 32 10 869 eine konzentrierte wässrige Biozid-Suspension, die neben einem Wirkstoff nichtionogene Tenside als Dispergiermittel enthält. Als nichtionogene Tenside werden dabei Polyoxyethylen-Phenylphenolether, Polyoxyethylen-Styrolphenolether und ähnliche Verbindungen vorgeschlagen. Diese langkettigen verzweigten Ether weisen demnach ein hohes Molekulargewicht auf.

In der EP 0 257 533 wird eine wässrige fungizide Dispersion beschrieben. Als Tenside werden hierbei eine Kombination von Ethylenoxid-Propylenoxid-Blockpolymeren mit Alkanolen oder Arylphenolen vorgeschlagen. Diese Tenside, die wiederum langkettige Polymere sind, weisen ein Molekulargewicht zwischen 1000 und 20.000 auf.

In der DE 36 31 558 wird eine Suspoemulsion von Pflanzenschutzwirkstoffen vorgestellt, die ebenfalls Ethylenoxid-Propylenoxid-Blockpolymere als Tenside enthält.

Die bisher in Pflanzenschutzmitteln verwendeten Tenside sind demnach langkettige und z.T. verzweigte ethoxylierte Alkohole oder Blockpolymere mit einem sehr hohen Molekulargewicht. Dies ist auch verständlich, da die Formulierer bisher Tenside nach ihrer Eigenschaft als Emulgatoren ausgewählt haben und deshalb entsprechend langkettige ethoxylierte Alkohole bzw. Blockpolymere eingesetzt wurden, da diese ausgezeichnete Emulgatoreigenschaften besitzen. Diese Tenside können aber wegen ihrer Größe entweder gar nicht oder viel zu langsam in die Kutikeln eindringen und können demnach nicht als Beschleuniger wirken. Dies hat zur Folge, dass meist so viel Wirkstoff pro Hektar ausgebracht werden muss, bis eine zufriedenstellende Wirkung erzielt wird. Dass dabei oft nur wenige Prozente der Wirkstoffmenge zum Wirkort gelangen, der Rest aber diffus in die Umwelt gelangt, wird in Kauf genommen. Diese Vorgehensweise ist aber in Zukunft nur schwer durchzuhalten. Genehmigungsbehörden und die Öffentlichkeit drängen immer nachhaltiger auf verbesserte Methoden auch im Pflanzenschutz.

Hier setzt die vorliegende Erfindung ein, deren Aufgabe es ist, ein Pflanzenbehandlungsmittel anzugeben, das einen Zusatzstoff enthält, der ein Eindringen in die Kutikeln der Blätter direkt zum Wirkort beschleunigt. Der zusätzliche Hilfsstoff soll dabei aus Naturstoffen herstellbar sein oder selbst ein Naturstoff sein, um eine gute biologische Abbaubarkeit zu garantieren.

Die Erfindung wird durch die kennzeichnenden Merkmale des Anspruches 1 gelöst. Die Unteransprüche 2 und 3 stellen vorteilhafte Weiterbildungen dar.

Das Verfahren zur Verbesserung des Eindringvermögens von Wirkstoffen in Pflanzenbehandlungsmitteln ist durch die Merkmale des Anspruchs 4 gekennzeichnet.

Anspruch 5 kennzeichnet die erfindungsgemäße Verwendung des beanspruchten Akzelerators für Pflanzenbehandlungsmittel.

Im Sinne der Erfindung werden unter Pflanzenbehandlungsmittel insbesondere Mittel zum Schutze vor Krankheiten (Fungizide) verstanden. Sie enthalten einen oder mehrere Wirkstoffe. Es handelt sich dabei um Fungizide (töten Pilze).

Pflanzenbehandlungsmittel in wässriger bzw. in Form von Emulsionen kommen dabei als Formulierungen in den Handel. Formulierungen sind Rezepturen, die neben dem Wirkstoff verschiedene andere Stoffe, sogenannte Hilfsstoffe oder Adjuvantien, enthalten.

Die Ausbringung derartiger Pflanzenbehandlungsmittel erfolgt dabei am häufigsten durch Spritzen auf die Blätter. Das hat verschiedene Gründe:

1. Die Ausbringung ist billig und bequem.

2. Viele Wirkstoffe werden im Boden festgelegt und/oder durch Mikroorganismen schnell abgebaut.

3. Wirkstoffe, die eine sehr geringe Wasserlöslichkeit haben, werden von den Wurzeln sehr schlecht aufgenommen

und in den Pflanzen nicht transloziert. Solche Stoffe können die Wirkorte in den Blättern gar nicht erreichen und sind wirkungslos, wenn sie über dem Boden appliziert werden. Der Schutz des Bodens und des Grundwassers ist ein weiterer Grund dafür, dass Pflanzenbehandlungsmittel bevorzugt auf die oberirdischen Organe der Pflanzen ausgebracht werden.

Von den oberirdischen Organen spielen die Blätter bei der Aufnahme von Pflanzenbehandlungsmitteln die wichtigste Rolle. Die Haut der Blätter ist mit einer dünnen Polymermembran überzogen, die sogenannte Kutikula. Sie bildet die Grenzschicht zur Umwelt und dient dem Schutz gegen Wasserverlust und Infektion durch Schadorganismen. Die Kutikula hat eine extrem geringe Durchlässigkeit für Wasser und für wasserlösliche Stoffe, insbesondere für Ionen. Je lipophiler die Stoffe sind, um so größer ist die Durchlässigkeit der Kutikeln. Der Grund für die geringe Permeabilität der Kutikeln ist die Tatsache, dass das Polymer mit Wachsen imprägniert ist. Diese Wachse sind mikrokristalline Festkörper, in denen die Diffusionskoeffizienten im Bereich von $10^{-16}$ bis $10^{-20}$ $m^2/s$ liegen. Zum Vergleich: In Wasser und anderen Flüssigkeiten liegen die Diffusionskoeffizienten bei $10^{-10}$ $m^2/s$. Alle systemischen Wirkstoffe müssen durch die Kutikula hindurch, ehe sie überhaupt wirksam werden können. Solche Stoffe müssen aber auch im Gewebe und in den Transportbahnen transloziert werden. Da dieser Transport in den Pflanzen immer in . wässrigen Phasen stattfindet, müssen systemische Wirkstoffe eine hinreichende Wasserlöslichkeit haben. Das ist das Dilemma: Ist die Wasserlöslichkeit groß, dann verhindert die Kutikula die schnelle Aufnahme in die Blätter; aber die Stoffe werden gut transportiert. Ist dagegen die Wasserlöslichkeit sehr schlecht, dann ist zwar die Kutikula hinreichend permeabel, aber der Transport in der Pflanze ist unreichend. Es ist also eine der Aufgaben der Formulierungshilfsstoffe, die Kutikula für relativ polare Wirkstoffe hinreichend durchlässig zu machen, ohne dabei die Pflanzen zu schädigen. Das geht nur durch Erhöhung der Diffusionskoeffizienten der Wirkstoffe in den kutikulären Wachsen.

Erfindungsgemäß wurde nun gefunden, dass durch Zugabe der Verbindungen der allgemeinen Formel (I) zu dem Pflanzenbehandlungsmittel eine entscheidende Erhöhung des Diffusionskoeffizienten stattfindet. Diese Stoffe wirken demnach als Akzeleratoren, d.h. als Beschleuniger.

Im Sinne der Erfindung werden unter Akzeleratoren Stoffe verstanden, die die Mobilität der Wirkstoffe in der Kutikula deutlich erhöhen. Damit erhöht sich auch die Penetrationsgeschwindigkeit. Akzeleratoren wirken somit in der Kutikula und diese Wirkung ist unabhängig von den Wirkungen anderer Wirkstoffe, wie z.B. Emulgatoren, Lösungsvermittlern und Lösungsmittel.

Überraschenderweise hat sich gezeigt, dass ganz bestimmte Verbindungen ein Eindringen von in Pflanzenbehandlungsmitteln enthaltenen fungiziden Wirkstoffen deutlich verbessern. Erfindungsgemäß ist vorgesehen, in Pflanzenbehandlungsmitteln mit fungiziden Wirkstoffen und an sich bekannten Hilfsstoffen zusätzlich als Akzelerators eine Verbindung, die aus der Gruppe der allgemeinen Formel (I)

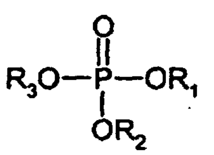

(I)

worin

$R_1$, $R_2$ und $R_3$ ein geradkettiges oder verzweigtes $C_1$-$C_8$-Alkyl ist und $R_1$, $R_2$ und $R_3$ gleich oder verschieden sein kann.

Erfindungsgemäß werden Verbindungen der allgemeinen Formel (I) bzw. deren Mischungen eingesetzt. Bevorzugt bei diesen Phosphorsäureestern ist es, wenn R ein $C_1$-$C_8$-Alkyl ist und $R_1$, $R_2$ und $R_3$ gleich sind. Besonders bevorzugte Verbindungen hierbei sind Triethyl-, Tripropyl-, Tributyl- und Tripentylphosphat. Bei den verzweigten ist Ethylhexyl- bevorzugt.

Die Erfindung umfasst auch Pflanzenbehandlungsmittel, die Mischungen der Akzeleratoren der allgemeinen Formel (I) enthalten. In welcher Weise der Akzelerator zusammengesetzt ist, d.h. ob lediglich eine einzelne Verbindung der allgemeinen Formel (I) oder Mischungen eingesetzt werden, hängt u.a. vom verwendeten Wirkstoff, den Trägern und den Zielpflanzen ab. Die Erfindung umfasst aber grundsätzlich alle Varianten von Pflanzenbehandlungsmitteln, sofern sie einen Akzelerator in der vorstehend beschriebenen Weise allein oder in Mischung untereinander enthalten.

In zahlreichen Versuchen wurde dabei festgestellt, dass es vorteilhaft ist, wenn der Akzelerator in einer Menge von 50 g bis ca. 500 g der pro Hektar auszubringenden Spritzbrühe zugesetzt wird, oder wenn er in einer Konzentration von 0,01 bis 0,1 % in der Spritzbrühe vorliegt. Die Konzentration der Formulierung, d.h. die zugegebene Menge des Akzelerators hängt dabei sehr stark vom verwendeten Wirkstoff, den Pflanzenarten und ganz besonders von der Blattfläche, die zu besprühen ist, und den Mengen an kutikulären Wachsen ab.

Das Pflanzenbehandlungsmittel selbst kann dabei auf zwei verschiedenen Wegen hergestellt werden. Der Beschleuniger, d.h. der Akzelerator oder dessen Mischungen, kann dabei bereits bei der Herstellung, d.h. bei der

Formulierung des jeweiligen Pflanzenbehandlungsmittels in der entsprechenden Menge zugegeben werden. Eine weitere Möglichkeit besteht darin, dass der Akzelerator in bereits fertige Formulierungen nachträglich zugefügt wird. Der Akzelerator könnte demnach vom-Anwender zusammen mit dem Pflanzenbehandlungsmittel z.B. in den Tank der Spritze gegeben werden, wodurch sich die erforderliche Menge an Wirkstoff erheblich reduzieren ließe. Das würde Kosten einsparen und gleichzeitig die Belastung der Umwelt mit Bioziden reduzieren.

Somit eröffnen sich mit den erfindungsgemäßen Pflanzenbehandlungsmitteln völlig neue Verfahren.

Mit dem erfindungsgemäßen Pflanzenbehandlungsmittel, das einen Beschleuniger enthält, lassen sich demnach wirksamer Pilzkrankheiten bekämpfen, als es mit bisherigen Mitteln möglich war.

Die Akzeleratoren lassen sich demnach in sämtlichen bisher bekannten Pflanzenbehandlungsmitteln verwenden.

Die Erfindung wird anhand der Abbildungen 1 bis 12 näher erläutert. Es zeigen:

| | |
|---|---|
| Abb. 1 | den Desorptionsgraphen von 2,4-D aus Stephanotis CM vor und nach (Pfleil) Behandlung der CM mit Tributylphosphat (TBP) (Daten für 6 verschiedene CM), |
| Abb. 2 | die Abhängigkeit des Effektes von Tributylphosphat von 1/k bei Stephanotis CM, |
| Abb. 3 bis 6 | Effektgraphen für Akzeleratoren der Formel (II) bei Citrus CM, |
| Abb. 7 | den Effekt von Tributylphosphat aud die Mobilität von 2,4-D in Kutikeln von verschiedenen Pflanzenarten und Herkünften, |
| Abb. 8 | den Einfluss von Akzeleratoren der Formel (II) (1 %) auf die Penetration von Harnstoff durch die CM von Birnenblättern, |
| Abb. 9 | den Einfluss von Akzeleratoren der Formel (II) (1 %) auf die Penetration von Harnstoff durch die CM von Stephanotisblättern, deren Permeabilität viel geringer ist als die der Birnenblätter (vgl. die Kurven für die Kontrolle (Wasser)), |
| Abb. 10 | den Einfluss der Tributylphosphat-Konzentration (Angaben in %) auf die Penetration von Harnstoff durch die Stephanotis CM, |
| Abb.11 | den Einfluss der Tributylphosphat-Konzentration (in %) auf die Penetration von Harnstoff durch die Stephanotis CM, |
| Abb. 12 | den Einfluss der Akzeleratoren der Formel (II) (TBP) (DBA) auf die Penetration von MV241 durch die Stephanotis CM (Konzentrationen in Mol/Liter), |

Zum besseren Verständnis der Abbildungen werden nachfolgend einige Grundlagen abgehandelt.

Die Oberflächen der Blätter sind von sehr dünnen Häutchen überzogen, die Kutikeln genannt werden. Kutikeln sind Polymermembranen, die sich wie folgt zusammensetzen: In eine Matrix aus unlöslichen vernetzten Hydroxyfettsäuren sind an der Grenzfläche zur Luft Wachse eingebettet und aufgelagert. Die Inkrustierung der Polymermatrix mit Wachsen verleiht den Kutikeln eine sehr niedrige Permeabilität für Wasser und andere Stoffe. Durch die partielle Inkrustierung mit Wachsen erhält die Kutikula Laminatstruktur. Die Innenseite der Kutikeln besteht aus dem Polymer, und diese Region macht etwa 90 % der gesamten Masse der Kutikula aus. Diese Schicht ist bei Pomeranzenblättern (Citrus) etwa 2 bis 3 µm dick. Die mit Wachs inkrustierte Schicht liegt außen auf und ist nur etwa 0,1 bis 0,3 µm dick.

Die meisten Versuche wurden mit enzymatisch isolierten Kutikeln von Pomeranzenblättern (Citrus CM) durchgeführt, weil es sich dabei um besonders gute Barrieren handelt.

Einige Versuche wurden auch mit isolierten Kutikeln (CM) von anderen Pflanzenarten (Blätter von Birnen, Kirschlorber, Zitronen, Tee, Stephanotis, Eisenholz und von Tomaten- und Paprikafrüchten) durchgeführt (siehe Abb. 10 und 22).

Zwei verschiedene Arten von Versuchen wurden durchgeführt, um die Wirksamkeit der Akzeleratoren zu testen und zu demonstrieren. UDOS (unilateral desorption from the outer surface) diente dazu, die Mobilität der Wirkstoffe in der Kutikula und die Effekte der Akzeleratoren auf die Mobilität zu messen. Ob die so ermittelten Akzeleratoreffekte auf die Stoffmobilität in der Kutikula sich auch die Wirkstoffpermeabilität auswirken, wurde mittels SOFU (simulation of foliar uptake) überprüft.

**UDOS**

Vor Versuchsbeginn wurde die innere Polymerschicht der isolierten Kutikula mit einer $^{14}C$-markierten Modellsubstanz beladen. Als Modellsubstanzen wurden Harnstoff (kleines und sehr polares Molekül), 2,4-Dichlorphenoxyessigsäure (2,4-D), bzw. MV241 (ein sehr großes und sehr unpolares Molekül) eingesetzt.

2,4-D wurde als Modellsubstanz ausgewählt, weil es eine mittlere Molekülgröße und mittlere Polarität hat. Das in der Polymerschicht sorbierte 2,4-D wird dann von der Außenseite unter Verwendung eines Phospholipid-Suspension (PLS) desorbiert. PLS ist ein inertes Desorptionsmedium, es verändert die Kutikeln weder chemisch noch strukturell. Nennt man die zur Zeit t desorbierte Menge $M_t$, und die anfänglich in der Kutikula (CM = cutiular membrane) enthaltende Menge 2,4-D $M_o$, dann lässt sich der Desorptionsverlauf als Prozess erster Ordnung mit der folgenden Gleichung beschreiben:

$$- 1n(1-M_t/M_o) = kt$$

Wird also der Logarithmus der relativen Menge (= die Konzentration) von 2,4-D gegen die Zeit aufgetragen, so ist die Steigung der Geraden die Geschwindigkeitskonstante der Desorption, die dem Diffusionskoeffizienten von 2,4-D in der mit Wachsen inkrustierten äußeren Schicht der Kutikula proportional ist. Das heißt, k ist ein Mobilitätsparameter, und der Einfluss der freien und der ethoxylierten Fettalkohole und der anderen Akzeleratoren auf die Mobilität von 2,4-D lässt sich folglich quantifizieren, indem man den Einfluss der Akzeleratoren auf k misst.

Dabei wurde wie folgt vorgegangen:

Zunächst wird für jede CM die Geschwindigkeitskonstante (k) unter Verwendung von PLS als Desorptionsmedium gemessen, wobei k der Steigung der Geraden bis zum Pfeil entspricht. Danach (nach vier Tagen) wurde das Desorptionsmedium gewechselt. Je nach Wirksamkeit der Desorptionsmedien ändert sich die Steigung der Graphen entweder plötzlich oder allmählich. Im ersten Fall ergibt sich eine neue konstante und größere Geschwindigkeitskonstante, im zweiten Fall ist die Geschwindigkeitskonstante zeitabhängig, sie nimmt mit der Zeit zu. Das Verhältnis der Geschwindigkeitskonstanten, die mit Akzelerator bzw. mit PLS gemessen wurden, ist der Effekt des Akzelerators. Ist $k_{tensid}/k_{ps}$ = 1, dann ist der Akzelerator wirkungslos. Ist das Verhältnis größer als 1, dann wird durch den Akzelerator der Diffusionskoeffizient in der wachsinkrustierten Schicht um den entsprechenden Faktor erhöht.

Graphen werden als Desorptions-Graphen bezeichnet. Trägt man den für jede einzelne CM bestimmten Effekt gegen den Kehrwert der mit PLS bestimmten Geschwindigkeitskonstanten auf (1/k, bzw. $k^{-1}$), so erhält man einen sogenannten Effekt-Graphen. Es wurde dabei immer der maximale Effekt, der gemessen worden ist, aufgetragen.

Die Abb. 16 zeigt exemplarisch die Abhängigkeit der Reaktionsgeschwindigkeit der Desorption von den Eigenschaften der Testsubstanzen. Bei hochwirksamen Stoffen wird der Desorptionsgraph sehr schnell wieder linear. Mit zunehmender Länge der Moleküle werden die Desorptionskurven zeitabhängig. Das liegt daran, dass die Akzeleratoren in die Kutikula eindringen müssen, damit sie die Mobilität des 2,4-D überhaupt erhöhen können. Dieser Prozess dauert um so länger, je größer die Moleküle sind. Die Steigung der Graphen nimmt solange zu, bis die Konzentration des Tensides in der CM mit der Aussenlösung (das Desorptionsmedium hatte immer eine Konzentration von 0,025 Mol $L_{-1}$) im Gleichgewicht steht. Diese Gleichgewichtseinstellung dauerte bei einigen Akzeleratoren nur wenige Stunden, bei anderen wurde das Gleichgewicht auch nach 4 bis 5 Tagen Desorption nicht erreicht.

Die Effektgraphen (bb. 17 bis 22) zeigen alle, dass der Effekt, der bei einer gegebenen CM gemessen wurde, immer proportional von $k^{-1}$ war, d.h. je niedriger die 2,4-D Mobilität vor der Behandlung mit Akzelerator war, um so größer war der Effekt.

Bei sehr wirksamen Akzeleratoren gehen die Effektgraphen alle durch Null und eine sehr gute Linearität ist sichtbar (Abb. 17, 18, 19, 22). Je steiler die Gerade, um so stärker war die Wirkung des Akzelerator.

Mit zunehmender Größe der Akzeleratoren nimmt die Steigung der Effektgraphen ab; die Effekt werden kleiner, es dauert länger, bis maximale Effekte erreicht werden, und die Anpassungen an eine Gerade werden schlechter (Abb. 20, 21).

Da die Wirkung von der Akzeleratorkonzentration in der Kutikula abhängt, ist sie auch von seiner Konzentration im Desorptionsmedium abhängig. Sinkt sie unter eine bestimmte kritische Konzentration, dann dauert es länger, bis die maximalen Effekte auftreten (hier nicht dokumentiert), und die Effekte sind niedriger.

Die für Citrus gezeigten Effekte auf die Mobilität von 2,4-D wurden auch für Kutikeln von anderen Arten beobachtet (Abb. 22) und es ist zu erwarten, dass sie bei allen Arten auftreten.

(i) Die maximalen Effekte werden um so schneller erreicht, je höher $k_{ps}$ ist (hier nicht dokumentiert).

(ii) Die Effekte sind um so größer, je niedriger $k_{ps}$ ist (Abb. 22).

Die Akzeleratoren der Formeln (II) sind im Gegensatz zu den ethoxylierten Alkoholen keine Tenside. In der Wirkung sind sie allerdings ähnlich. Unterschiede in der Wirkungsgeschwindigkeit und Wirkungsdauer ergeben sich je nach Pflanzenart und Wirkstoff.

Die Geschwindigkeit der Einstellung der Akzeleratorwirkung hängt auch bei der Formel (II) von deren Größe ab. Akzeleratoren mit niedrigem Molekulargewicht dringen sehr schnell in die Kutikeln ein und wirken praktisch sofort (Abb. 16). Die Geschwindigkeit des Eindringens und die Dauer der Wirkung der Akzeleratoren lässt sich durch die Wahl der Grösse der Substituenten ($R_1$ bis $R_3$) variieren und somit an die Penetrationsgeschwindigkeit der Wirkstoffe anpassen. Die Wirkung der Akzeleratoren (II) ist umso besser, je niedriger die Wirkstoffmobilität in der CM vor der Behandlung ist. Das gilt für die Variabilität in k innerhalb einer Pflanzenart (Abb. 17 bis 19) als auch für die Variabilität in k zwischen den Arten (Abb. 22). Der Einsatz der Akzeleratoren ist also immer dann besonders sinnvoll, wenn ein Wirkstoff ohne Akzelerator nur sehr langsam eindringt, sei es, dass das an den Eigenschaften des Wirkstoffes oder an den Eigenschaften der Kutikeln liegt.

**SOFU**

Mit diesem Verfahren wird die Geschwindigkeit der Penetration durch die Kutikeln direkt gemessen. SOFU dient also der Verifizierung der Ergebnisse, die mittels UDOS gemessen worden sind.

Bei diesen Verfahren werden die radioaktiv markierten Wirkstoffe zusammen mit den Akzeleratoren in wässriger Lösung auf die Außenseite der Kutikeln appliziert (5 µl). Gleichzeitig wird von der Kutikulainnenseite desorbiert. Die Penetration verläuft zum größten Teil aus einem hydratisierten Rückstand auf der Kutikula, denn das Wasser der Lösung verdampft innerhalb von 30 Minuten.

Bei den Penetrationsgraphen wird auf der Ordinate entweder der Logarithmus der Menge aufgetragen, die noch auf der Kutikula ist (linke Seite), oder die relative Wirkstoffmenge, die auf der Kutikulainnenseite desorbiert worden ist (percent penetration, auf der rechten Seite). Die Kurven zeigen Mittelwerte von 10 bis 20 CM. Die Versuche wurden auf 24h begrenzt, weil bei guten Formulierungen mit richtigen Akzeleratoren nahezu die gesamte applizierte Dosis innerhalb von 24h in das Blatt eindringen sollte.

Abb. 23 und 24 zeigen die Penetration von Harnstoff durch die Kutikeln von Birnenblättern und Stephanotisblättern. Die Akzeleratorkonzentration betrug 1 %. Die Durchlässigkeit von Stephanotis CM ist deutlich geringer, als die von Birnenblatt CM (Wasser, d.h. ohne Akzelerator). Trimethylphosphat (TMP) war unwirksam und die Wirksamkeit nahm in der Reihenfolge Triethyl-(TEP), Tripropyl (TPP) und Tributyl (TBP) zu. Die Unterschiede in der Penetration sind am Anfang (nach 2 bis 12h) am größten.

Die Akzeleratoren der Formel (II) sind auch bei sehr niedrigen Konzentrationen (Angaben in Prozent) sehr wirksam. Die besten Wirkungen lassen sich keineswegs mit den höchsten Konzentrationen erzielen (Abb. 25 und 26). So hatten Tributylphosphat und Tripropylphosphat bei 0,03 % eine bessere Wirkung als bei 0,1 %. Die Harnstoffpenetration durch Stephanotis CM wurde sogar noch bei 0,002 % beachtlich beschleunigt (Abb. 25).

Dass die Wirkung der Akzeleratoren besonnders gross ist, wenn die Wirkstoffmobilität ohne Akzelerator besonders niedrig ist, wurde bereits mittels UDOS mehrfach gezeigt (vgl. Abb. 17 bis 19, 22). Die Modellsubstanz MV241 hat wegen ihres hohen Molekulargewichts nur sehr niedrige Diffusionsraten in der Kutikula. Daher sind auch die Penetrationsraten (Abb. 27) sehr niedrig, wenn kein Akzelerator zugesetzt wird (Wasser-Kontrolle). Durch Wahl des richtigen Akzelerators in der richtigen Menge kann die Penetrationsgeschwindigkeit erheblich beschleunigt werden, und das schon nach 2h.

**Patentansprüche**

1. Pflanzenbehandlungsmittel in Form einer wässrigen Lösung bzw. als flüssige Emulsion/Suspension, enthaltend mindestens ein Fungizid als Wirkstoff und Hilfsstoffe, wie Tenside, Lösungsmittel und gegebenenfalls Emulgatoren in bekannten Konzentrationen, **dadurch gekennzeichnet, dass** das Mittel zusätzlich 50 g bis 1 kg eines Akzelerators pro Hektar auszubringende Spritzbrühe, bzw. eine 0,01 bis 1 %ige Lösung des Akzelerators in der Spritzbrühe enthält und dass der Akzelerator ausgewählt ist aus der Gruppe der Verbindungen der allgemeinen Formel (II)

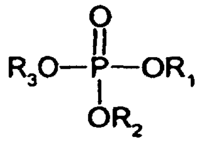

(II)

worin
$R_1$, $R_2$ und $R_3$ ein geradkettiges oder verweigtes $C_1$-$C_8$-Alkyl ist und $R_1$, $R_2$ und $R_3$ gleich oder verschieden sein kann.

2. Pflanzenbehandlungsmittel nach Anspruch 1, **dadurch gekennzeichnet, dass** 50 bis 500 g Akzelerator pro Hektar auszubringender Spritzbrühe bzw. eine 0,01 bis 0,1 %ige Lösung des Akzelerators in der Spritzbrühe eingesetzt wird.

3. Pflanzenbehandlungsmittel nach Anspruch 1 oder 2, **dadurch gekennzeichnet, dass** der Wirkstoff Tebuconazole ist.

4. Verfahren zur Verbesserung des Eindringvermögens von in Pflanzenbehandlungsmitteln enthaltenen Wirkstoffen, **dadurch gekennzeichnet, dass** ein Pflanzenbehandlungsmittel nach Anspruch 1 bis 3 eingesetzt wird.

5. Verwendung der Verbindungen der allgemeinen Formel (II) als Akzelerator in Pflanzenbehandlungsmitteln.

## Claims

1. Plant treatment composition in the form of an aqueous solution or as liquid emulsion/suspension, comprising at least one fungicide as active compound and adjuvants such as surfactants, solvents and, if appropriate, emulsifiers in known concentrations, **characterized in that** the composition additionally contains 50 g to 1 kg of an accelerator in the spray mixture to be applied per hectare, or a 0.01 to 1% strength solution of the accelerator in the spray mixture, and that the accelerator is selected from the group of the compounds of the general formula (II)

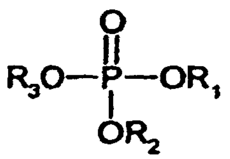

(II)

where
$R_1$, $R_2$ and $R_3$ is a straight-chain or branched $C_1$-$C_8$-alkyl and $R_1$, $R_2$ and $R_3$ can be identical or different.

2. Plant treatment composition according to Claim 1, **characterized in that** 50 to 500 g of accelerator in the spray mixture to be applied per hectare, or a 0.01 to 0.1% strength solution of the accelerator in the spray mixture, are employed.

3. Plant treatment composition according to Claim 1 or 2, **characterized in that** the active compound is tebuconazole.

4. Method for improving the penetration ability of active compounds which are present in plant treatment compositions, **characterized in that** a plant treatment composition according to Claim 1 to 3 is employed.

5. Use of the compounds of the general formula (II) as accelerators in plant treatment compositions.

## Revendications

1. Agent pour le traitement de plantes sous la forme d'une solution aqueuse, respectivement en suspension ou en émulsion, contenant au moins un fongicide comme substance active et des adjuvants tels que des tensioactifs, des solvants et, le cas échéant, des émulsifiants, dans des concentrations connues, **caractérisé en ce que** l'agent contient en plus 50 g à 1 kg d'un accélérateur par hectare de bouillie de pulvérisation à disperser ou une solution à 0,01 à 1 % de l'accélérateur dans la bouillie de pulvérisation, et **en ce que** l'accélérateur est sélectionné parmi le groupe des composés de la formule générale (II)

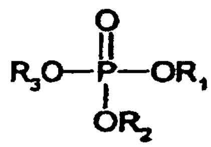

(II)

dans laquelle
$R_1$, $R_2$ et $R_3$ sont un alkyle en $C_1$-$C_8$ à chaîne droite ou ramifiée et $R_1$, $R_2$ et $R_3$ peuvent être identiques ou différents.

**2.** Agent pour le traitement de plantes selon la revendication 1, **caractérisé en ce que** l'on utilise 50 à 500 g d'accélérateur par hectare de bouillie de pulvérisation à disperser ou une solution à 0,01 à 0,1 % de l'accélérateur dans la bouillie de pulvérisation.

**3.** Agent pour le traitement de plantes selon la revendication 1 ou 2, **caractérisé en ce que** la substance active est du tébuconazole.

**4.** Procédé pour améliorer le pouvoir pénétrant des substances actives contenues dans les agents pour le traitement de plantes, **caractérisé en ce que** l'on utilise un agent pour le traitement de plantes selon les revendications 1 à 3.

**5.** Utilisation des composés de la formule générale (II) comme accélérateur dans des agents pour le traitement de plantes.

Abb. 1

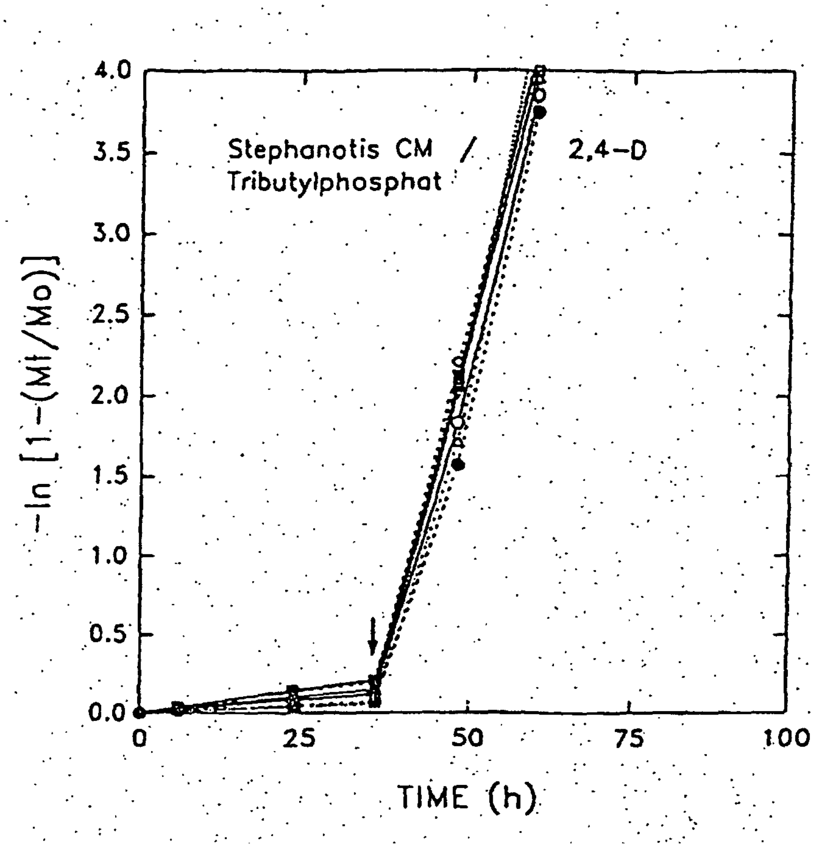
Stephanotis CM / 2,4-D
Tributylphosphat
−ln [1−(Mt/Mo)]
4.0
3.5
3.0
2.5
2.0
1.5
1.0
0.5
0.0
0
25
50
75
100
TIME (h)

Abb. 2

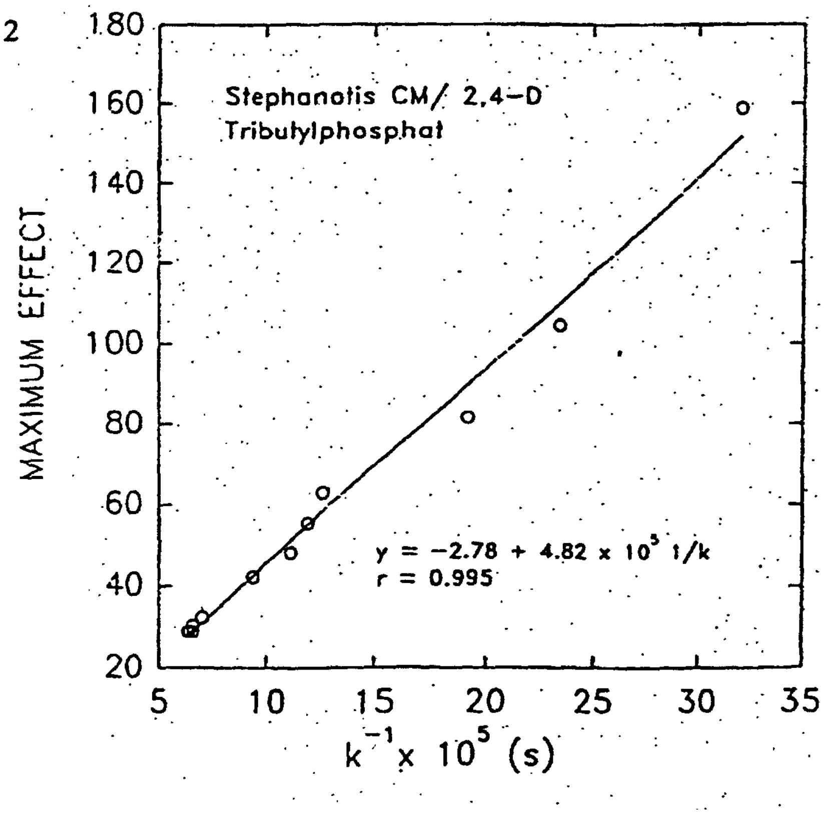
Stephanotis CM/ 2,4-D
Tributylphosphat
MAXIMUM EFFECT
180
160
140
120
100
80
60
40
20
y = −2.78 + 4.82 x 10⁵ 1/k
r = 0.995
5
10
15
20
25
30
35
k⁻¹ x 10⁵ (s)

Abb. 3

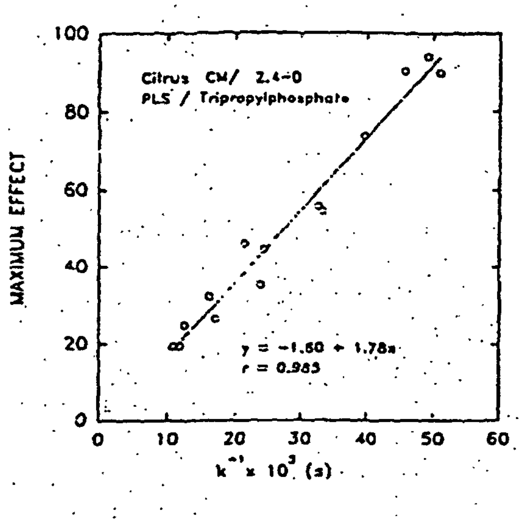


Abb. 4

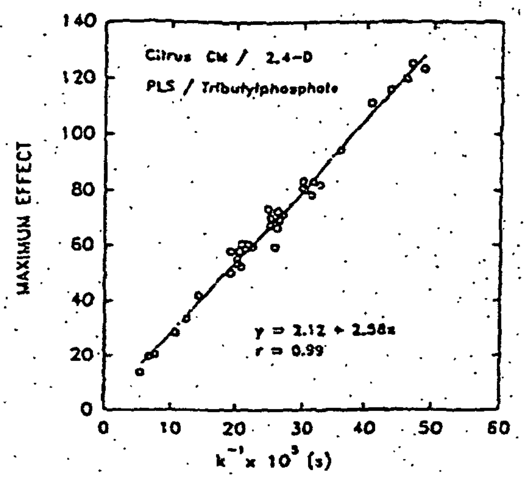


Abb. 5

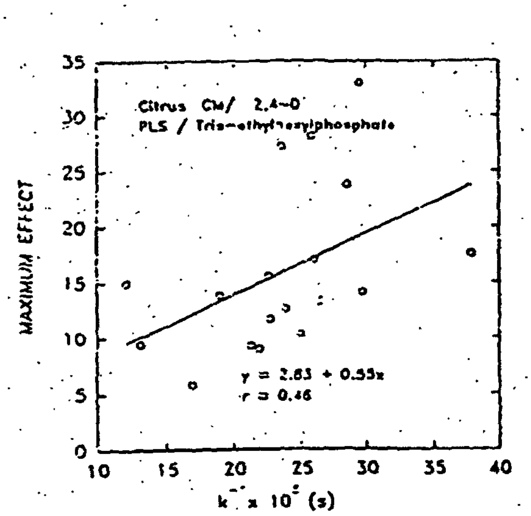


Abb. 6

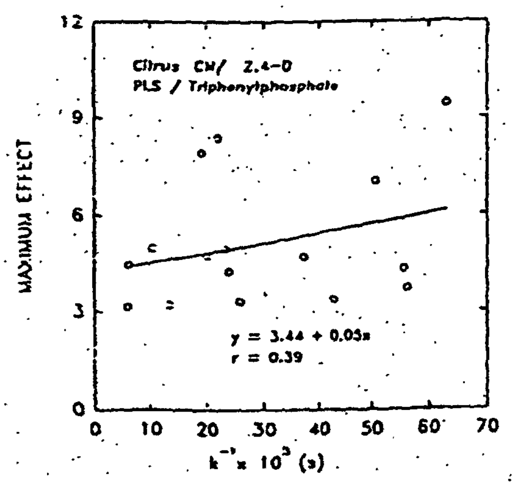

Abb. 7

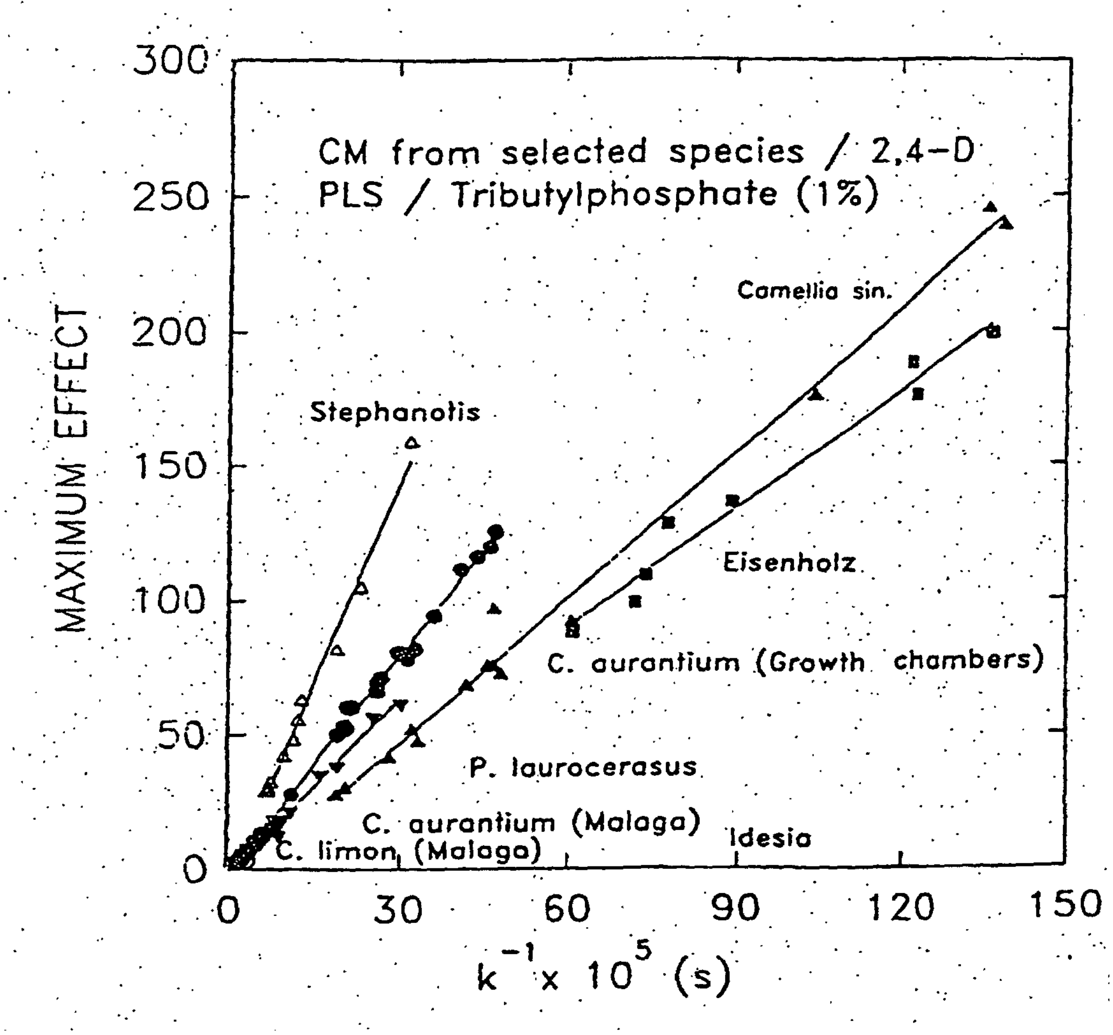
CM from selected species / 2,4-D
PLS / Tributylphosphate (1%)
MAXIMUM EFFECT
300
250
200
150
100
50
0
Camellia sin.
Stephanotis
Eisenholz
C. aurantium (Growth chambers)
P. laurocerasus
C. aurantium (Malaga)
Idesia
C. limon (Malaga)
0
30
60
90
120
150
$k^{-1} \times 10^{5}$ (s)

Abb. 8

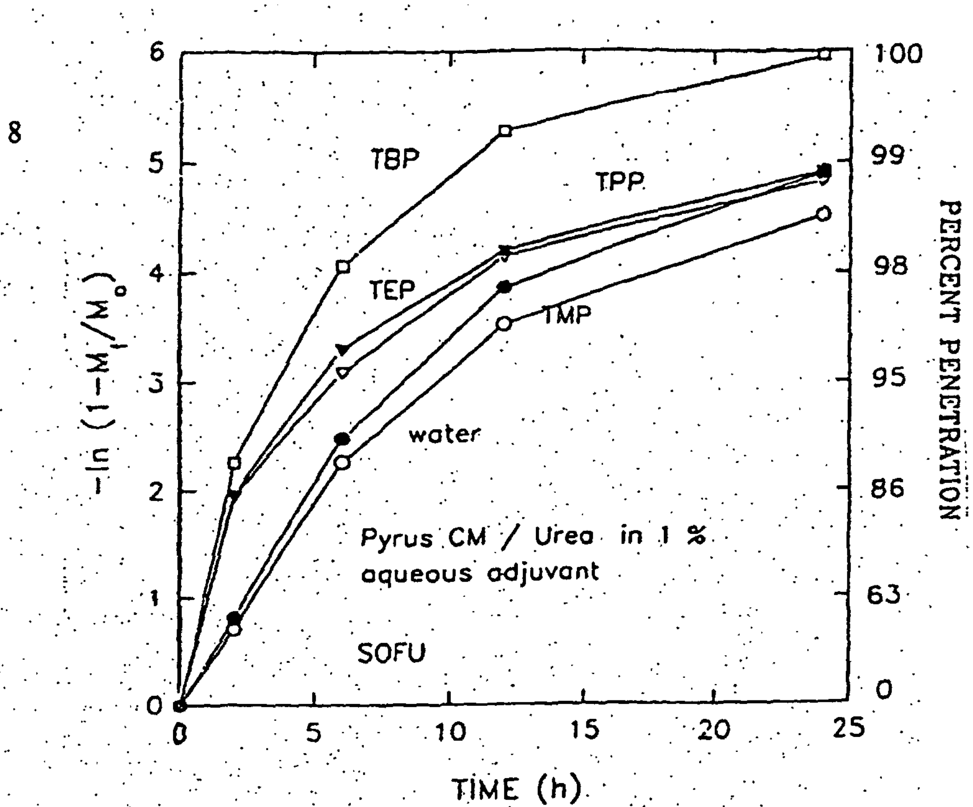

TBP
TPP
TEP
TMP
water
Pyrus CM / Urea in 1 % aqueous adjuvant
SOFU
$-\ln(1-M_t/M_o)$
PERCENT PENETRATION
TIME (h)


Abb. 9

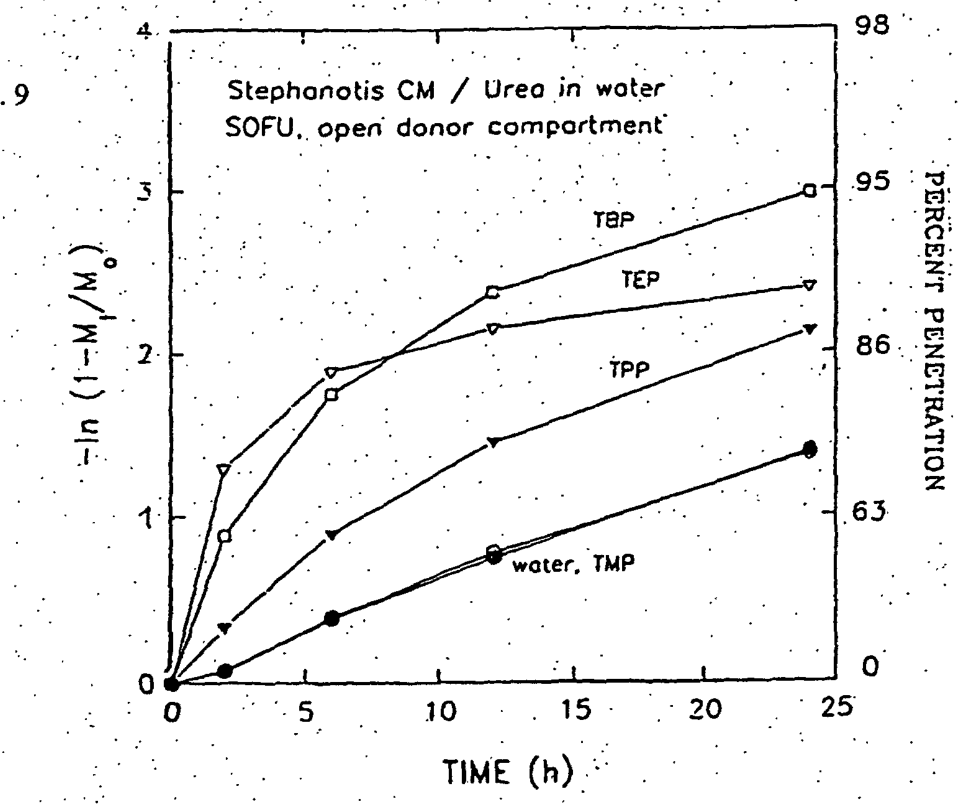

Stephanotis CM / Urea in water SOFU, open donor compartment
TBP
TEP
TPP
water, TMP
$-\ln(1-M_t/M_o)$
PERCENT PENETRATION
TIME (h)

Abb. 10

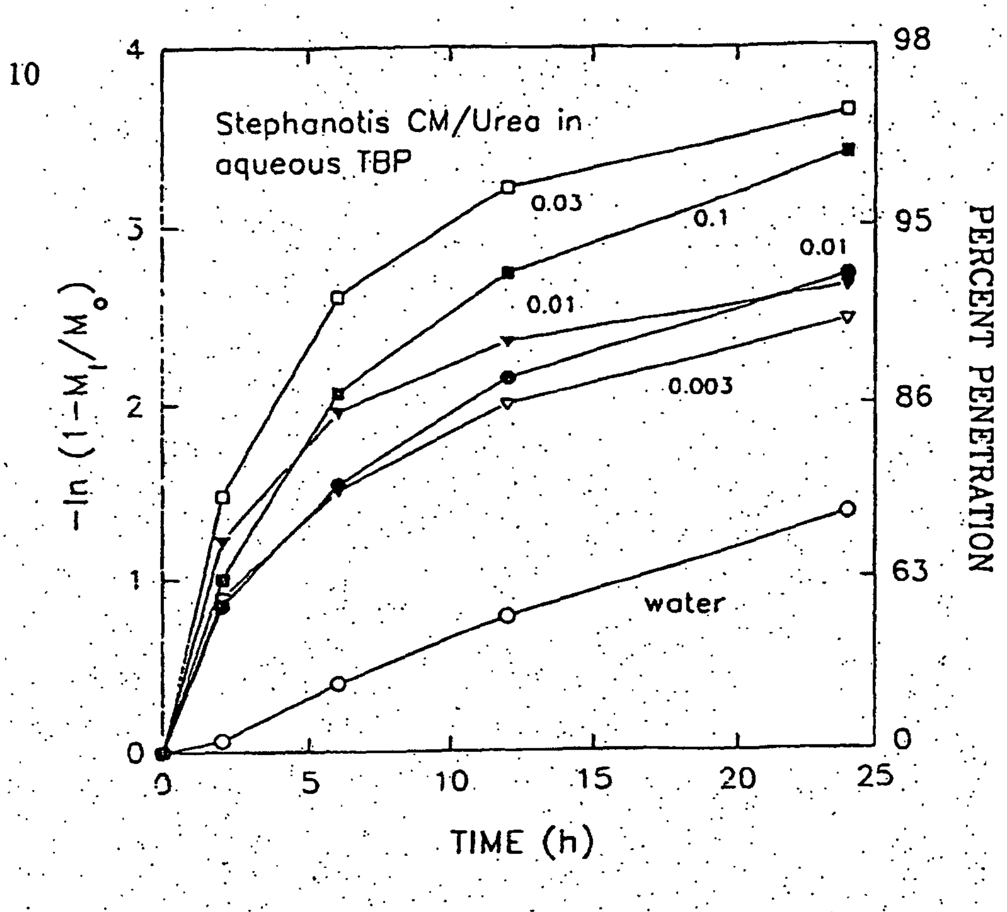
Stephanotis CM/Urea in aqueous TBP
0.03
0.1
0.01
0.01
0.003
water
-ln (1-M$_t$/M$_o$)
PERCENT PENETRATION
TIME (h)
0
1
2
3
4
5
10
15
20
25
98
95
86
63

Abb. 11

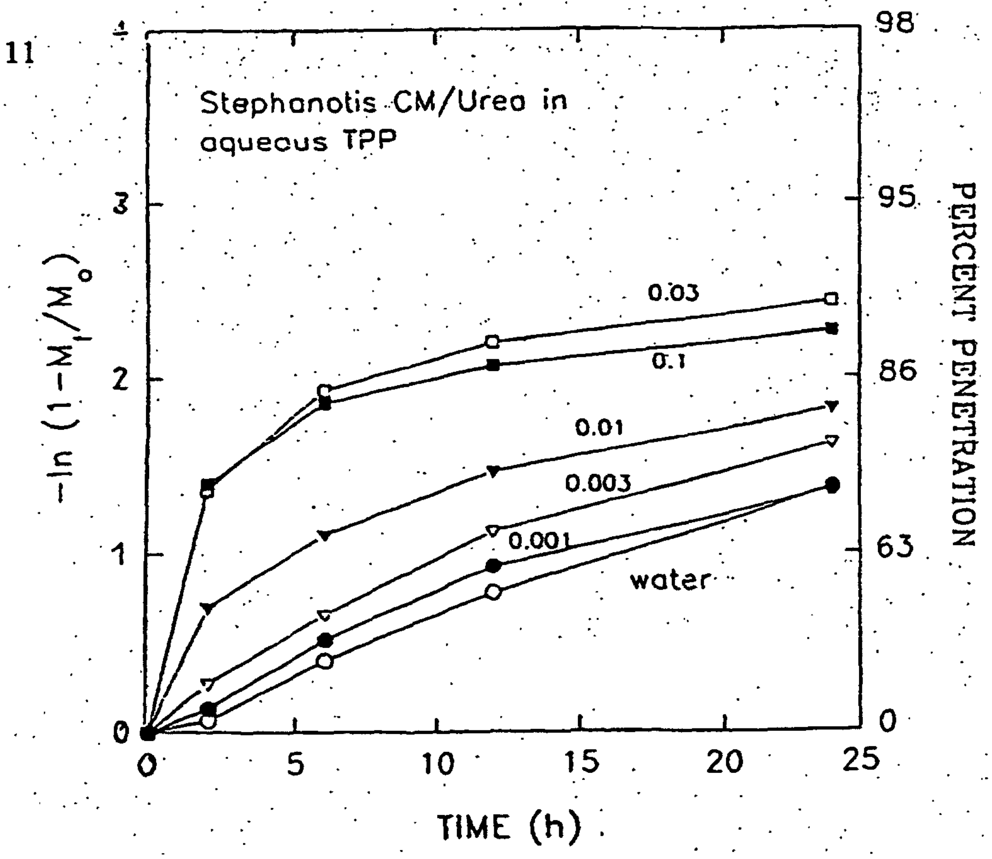
Stephanotis CM/Urea in aqueous TPP
0.03
0.1
0.01
0.003
0.001
water
-ln (1-M$_t$/M$_o$)
PERCENT PENETRATION
TIME (h)
0
1
2
3
5
10
15
20
25
98
95
86
63

Abb. 12

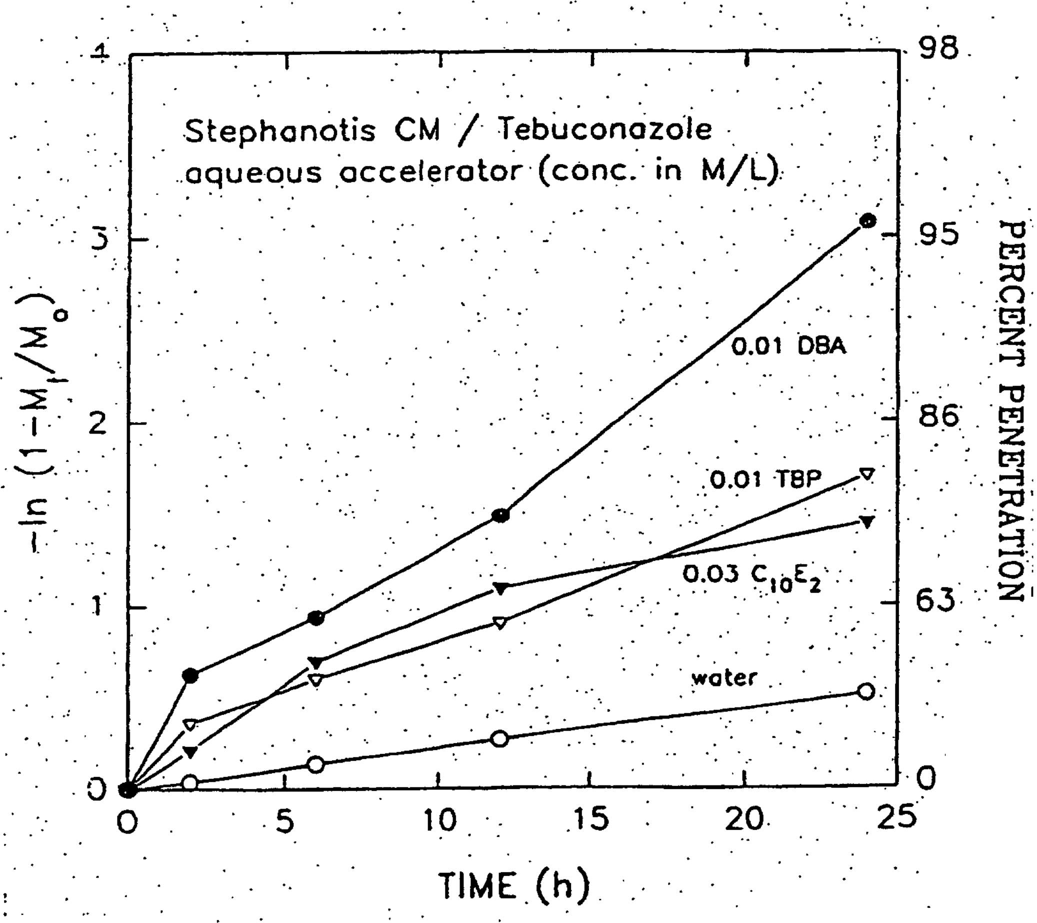
Stephanotis CM / Tebuconazole
aqueous accelerator (conc. in M/L)
0.01 DBA
0.01 TBP
0.03 $C_{10}E_2$
water
$-\ln(1-M_t/M_o)$
PERCENT PENETRATION
TIME (h)
0
1
2
3
4
5
10
15
20
25
98
95
86
63